Europäisches Patentamt

European Patent Office

Office européen des brevets

(11) Publication number: **0 462 342 A1**

## EUROPEAN PATENT APPLICATION

(21) Application number: **90311217.5**

(22) Date of filing: **12.10.90**

(30) Priority: **18.06.90 JP 159340/90**

(43) Date of publication of application:
**27.12.91 Bulletin 91/52**

(84) Designated Contracting States:
**CH DE FR GB IT LI SE**

(51) Int. Cl.⁵: **G01F 23/28**

(71) Applicant: **KANSAI AUTOMATION CO. LTD.**
**2-14, Togano-cho, Kita-Ku**
**Osaka(JP)**

(72) Inventor: **Watanabe, Kajiro**
**15-15 Maehara-cho, 4-Chome**
**Koganei-shi, Tokyo(JP)**

(74) Representative: **Barker, Rosemary Anne et al**
**c/o Mewburn Ellis, 2 Cursitor Street**
**London EC4A 1BQ(GB)**

(54) **Method and apparatus for detecting the level of a substance.**

(57) A tubular member (2) with one end (A) open has stationary wave generating means (1) at the other end thereof or within the tubular member, and stationary waves of a specific frequency are generated so as to have a node or antinode at the open end. A switching signal arises when the open end of the tubular member is completely closed by an object (3) or substance (14) being measured or when the object or substance approaches the open end. The stationary wave generating means is actuated by receiving an oscillation output from an oscillator, which may be part of a switching circuit for providing the said switching signal.

Fig. 9

Fig. 3

The present invention relates to a method of detecting if the contents in a tank or similar vessel has reached a specified level, without making contact therewith, and apparatus for carrying out the method.

Conventionally, methods of detecting content levels have employed contact type apparatus in which, for example, a rod element vibrating vertically at a specific frequency projects from the wall into the interior of a tank containing material such as powder, granules, or lumps. When the material makes contact with the rod element it restricts and ultimately stops the vibration of the rod element, and as this is detectable, the fact that the tank has been filled up to a specified level, is made apparent.

Apparatus of this type has its drawbacks. Since the vibration of the rod element is designed to be restricted and stopped by being pressed by the contents of the tank, very lightweight contents such as feathers or cotton may not be effective, so that when they reach a specified level it is not detected at all.

It is an object of the invention to provide a method whereby even the level of very lightweight materials, such as feathers or cotton, can be reliably detected.

The invention firstly provides a method of detecting the level of a substance wherein a tubular member with one end open has stationary wave generating means mounted therein or mounted at the other end thereof, the stationary wave generating means generates stationary waves having a node or antinode at the open end, and a switching signal arises when the open end is completely closed by the substance being measured or when the substance being measured approaches the open end.

The stationary wave generating means may conveniently comprise a piezoelectric vibrator, a quartz vibrator or a magnetostriction oscillator.

The length of the tubular member and the oscillation frequency are chosen so that when the stationary wave generating means generates stationary waves in the tubular member these waves are set in a state of resonance. However, when the open end of the tube is closed off (by material of which the level is to be detected), the stationary waves in the tubular member are set in a nonresonance state. This creates a high load on the wave generating means and high impedance in its driving coil, which in turn triggers a switching signal. In this way, it is possible reliably to detect the level even of very light material such as feathers and cotton. In addition, the structure of the apparatus used is very simple compared with conventional apparatus for this purpose, which facilitates its production at an economical price.

Specific embodiments in accordance with the invention will now be described, by way of example, with reference to the drawings, in which:

Fig. 1 is a schematic view of a first embodiment of the apparatus of the invention;

Fig. 2 is an electrical circuit equivalent to the loudspeaker in Fig. 1;

Fig. 3 is an explanatory drawing of the function of the first embodiment;

Fig. 4 is an electrical circuit equivalent of the loudspeaker in a resonance state;

Fig. 5 is a circuit diagram including the circuitry for driving the loudspeaker in Fig. 1;

Fig. 6 is an explanatory circuit diagram for explaining Fig. 5;

Fig. 7 represents an improved circuit compared to the circuit in Fig. 5;

Fig. 8 is a partial cross-section of a sensor unit in a second embodiment of the invention;

Fig. 9 is a smaller scale cross-section illustrating the mounting of a sensor unit on a tank in a third embodiment of the present invention;

Fig. 10 is an enlarged cross-section of the sensor unit of Fig. 8 and similar to that in Fig. 9;

Fig 11 is an enlarged view of the additional tube in Fig. 10;

Fig. 12 is a cross-section of a fourth embodiment of the invention;

Fig. 13 is a cross-section of parts enabling adjustment of the length of a tubular element as in Fig. 8;

Fig. 14 is a similar sectional view of an alternative part enabling adjustment of the length of a tubular element as in Fig. 8;

Fig. 15 is a similar sectional view of an open end portion of a tubular element which has been made flexible;

Fig. 16 illustrates the sensor unit of Fig. 15 mounted on a tank;

Fig. 17 is a sectional view of a modified example of an end region of a tubular element;

Fig. 18 is a cross-section of a modified embodiment of sensor unit, similar to Fig. 10;

Fig. 19 is a diagram of a signal processing circuit of a microphone as shown in Fig. 18; and

Fig. 20 illustrates an alternative partition to the sponge shown in Fig. 11.

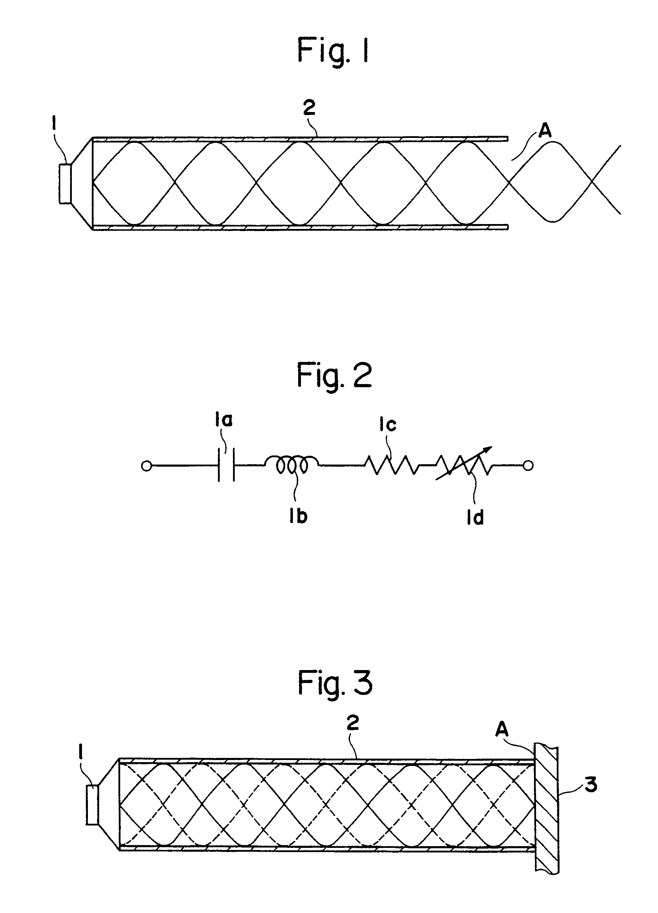

Referring now to Figs. 1 to 3, the basic principle of the invention is that a tubular member 2 with an open end A is provided with stationary wave generating means, such as a loudspeaker 1, possessing a resonance frequency as part of its acoustic characteristic. A driving circuit 4 (described below) having a pre-set driving frequency determines the resonance frequency of the loudspeaker 1. The loudspeaker 1 can be represented as a series circuit consisting of a capacitor 1a, a coil 1b, a resistance 1c, and variable acoustic impedance 1d as shown in Fig. 2.

The tubular member 2 in this example is cylindrical and has both ends open. One open end is, however, closed by the loudspeaker 1, while the other open end A is left open. The length of the tube 2 is selected to be an even number multiple of 1/4 wavelength of the sinusoidal signal of the loudspeaker 1 so that a node is formed in the open end A of the tube 2.

With such an arrangement so long as the end A of the tube 2 is left open, a sound wave emitted from the loudspeaker 1 becomes a stationary wave (the solid-line waveform in Fig. 1) in the tube 2 and exists in a state of resonance.

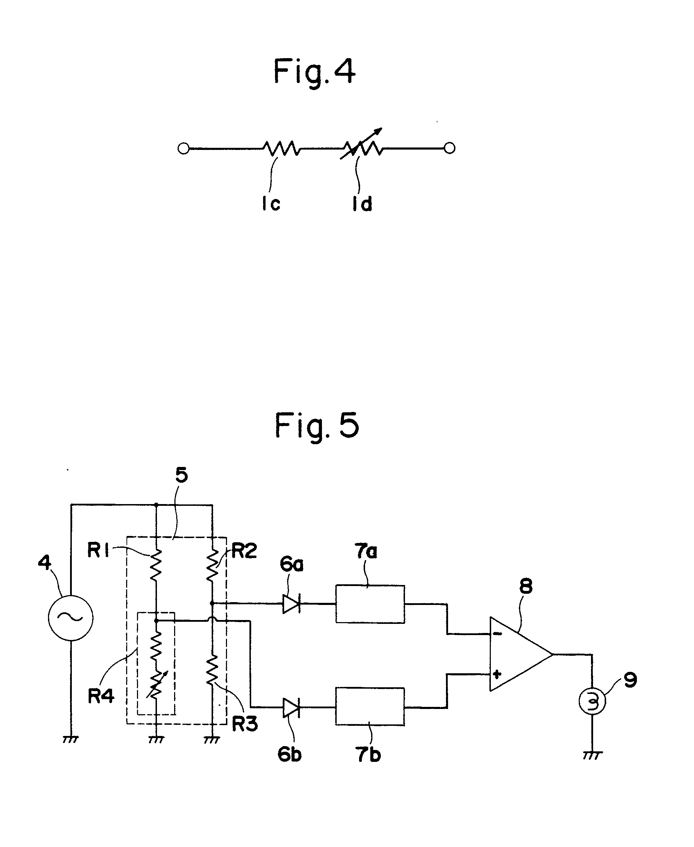

However, when the end A of the tube 2 is closed by an cbject 3 as shown in Fig. 3, the sound wave (the solid-line waveform in Fig. 3) emitted from the loudspeaker 1 hits the object 3 at its node, and thereby changes over to a nonresonant state (indicated by broken line waveform) which is deviated in phase by 90 degrees from the solid-line waveform in Fig. 3. In other words, the sound wave now has an antinode at the end A. The variable acoustic impedance 1d of the loudspeaker 1 is consequently changed to high impedance. Since the loudspeaker 1 is driven at the same frequency as the intrinsic resonant frequency of the loudspeaker 1 (the resonant frequency of the resonance circuit composed of capacitor 1a and coil 1b), the equivalent electrical circuit of the loudspeaker 1 becomes a series circuit of the resistance 1c and variable acoustic impedance 1d as shown in Fig. 4. Therefore, by detecting the difference between the impedance when the end A of the tube 2 is left open (the impedance in a series circuit of capacitor 1a, coil 1b, resistance 1c, and variable acoustic impedance 1d) and the impedance when it is closed (the impedance in a series circuit of resistance 1c and variable acoustic impedance 1d), it is possible to detect whether or not the object 3 is closing off the end A.

In the foregoing embodiment, the stationary waves are set to have a node at the open end A, but they may alternatively be set so as to have an antinode there, in which case a nonresonant state would be established when the end A is left open. Then, when end A is closed by the object 3, a state of resonance would be created. The change in impedance can be detected just a readily.

Incidentally, it is generally considered ideal that the acoustic characteristic of a loudspeaker i.e. its frequency should be flat, that is, it should be a loudspeaker free from resonance. However, in the present invention, since such resonance is positively utilized, a weight may be formed with resin or the like on the cone paper (or its equivalent) of the loudspeaker so as to generate the desired resonance.

Fig. 5 shows a circuit whereby the change of impedance can be detected.

The arrangement comprises an oscillation circuit (driving circuit) 4 the oscillation frequency of which sets the resonance frequency of the loudspeaker 1, and a bridge circuit 5 composed of the impedance R4 of the loudspeaker 1 (in a resonance state, it is the sum of resistance 1c and variable acoustic impedance 1d shown in Fig. 4), and resistances R1, R2, R3, the bridge circuit being supplied with an oscillation output in sine wave form from the oscillation circuit 4. While the tubular member 2 is open, i.e. while the end A of the tube 2 is not closed by the object 3, the equation R1 x R2 = R3 x R4 applies and the voltage at the junction of resistance R1 and impedance R4 is equal to the voltage at the junction of the resistances R2 and R3. The arrangement also includes first and second half-wave rectifying circuits, 6a, 6b, which rectify in half wave form the two voltages provided from the bridge circuit 5, and first and second integrating circuits 7a, 7b for integrating the rectified outputs supplied from the first and the second half-wave rectifying circuit 6a, 6b by a specific time constant. A comparator circuit 8 compares the integral outputs supplied respectively from the first and the second component circuit 7a, 7b and provides a high level signal when the output of the second integrating circuit 7b is greater. An alarm lamp 9 connected to the comparator circuit 8 lights up, to indicate when the end A of the tube 2 is closed by the object 3, when the output of the comparator circuit 8 becomes high level.

When the loudspeaker 1 is driven at the set resonance frequency in the state shown in Fig. 1, and the end A of the tube 2 is open, a resonance state is established. Therefore, the bridge circuit 5 is balanced, and the integral outputs from the first and the second integrating circuit 7a, 7b are equal. Accordingly, the output of the comparator circuit 8 remains low and the alarm lamp 9 does not light up.

When the end A of the tube (then in a resonance state) is closed by the object 3, the variable acoustic impedance R4 of the loudspeaker 1 is increased by the change of the stationary waves to a semiresonance state (the sine wave indicated by the dotted line in Fig. 3). In the bridge circuit 5 R1 x R3 no longer equals R2 x R4 so it is in an imbalanced state. As a result, the integral outputs from the first and the second integrating circuits 7a, 7b are mutually different in magnitude, and the alarm lamp 9 is lit up by a high level output signal from the comparator circuit 8, thereby indicating that the end A is closed.

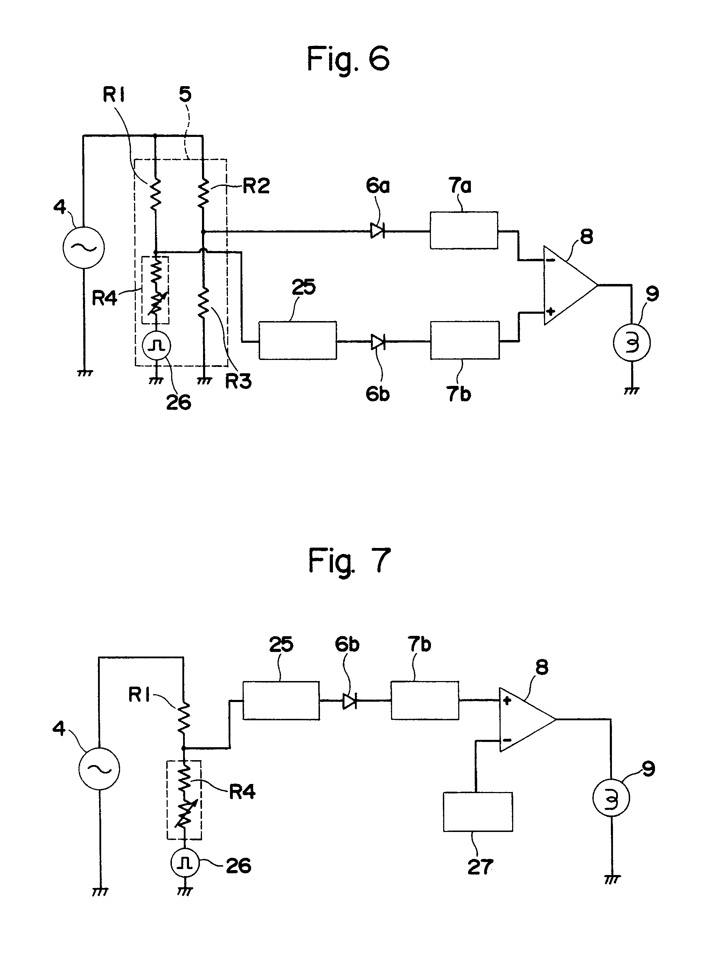

As the loudspeaker 1 has a sound receiving function as a microphone as well as a sound generating function, if a loud noise occurs in the tank or a sound is generated by an object hitting the outer wall of the tank, that noise, having a frequency component different from the driving frequency of the loudspeaker 1 generates a counterelectromotive force in a driving terminal of the loudspeaker 1 (in an equivalent circuit, indicated as pulse generation source 26; see Figs. 6, 7), the noise being impulsive and having a large wave crest value in a short time. The generation of such a counterelectromotive force sometimes causes erroneous operation of the apparatus. Therefore, in order to eliminate the aforesaid effects of such a noise, as shown in Fig. 6, a band pass filter 25, extracting only the driving frequency of the loudspeaker 1, or the frequency component proving the output signal of the oscillation circuit 4, may be inserted between an input terminal of the second rectifying circuit 6b and a non-earthed side terminal of the resistance R4. In Fig. 6, a pulse generation circuit 26 is shown for convenience sake, but it is not an actual circuit constituent element.

In the circuit shown in Fig. 5, the resistances R2, R3 of the bridge circuit 5, the first rectifying circuit 6a and the first integrating circuit 7a generate a reference voltage which is a threshold for operating the alarm lamp 9. By replacing these with a reference voltage generating circuit 27, as in Fig. 7, the circuit may be simplified.

In Figs. 6 an 7, the components shown with the same reference numerals as in Fig. 5 are equivalents thereof.

Although in this first embodiment the loudspeaker 1 is provided at one end of the two open ends of the tubular member 2, the present invention is obviously not limited to this construction and the loudspeaker 1 may alternatively be provided inside the tubular member 2.

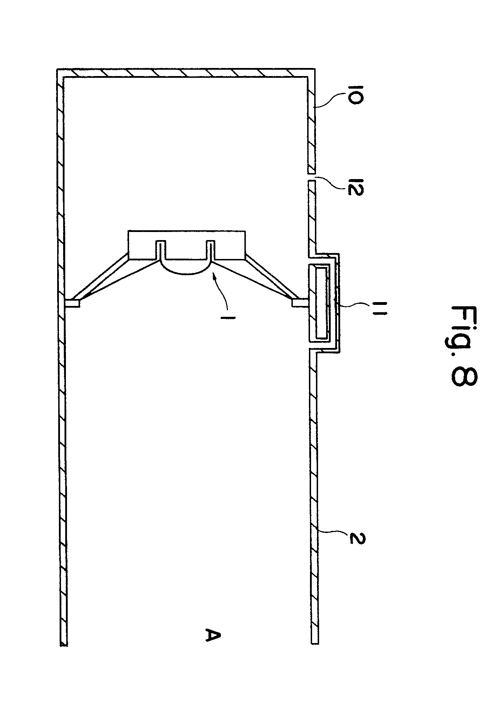

Referring now to Fig. 8, the same or equivalent parts to those in Fig. 1 are identified with the same reference numbers and are not explained again.

In this embodiment a cylindrical protective tube end portion 10 covers the loudspeaker 1 so as to seal it off from behind. The length of this closed end portion 10 is selected to be an exact multiple of the half wavelength of the driving frequency of the loudspeaker 1, so that the resonance state may always be formed. Air in the protective tube end portion 10 can communicate with the rest of the tube 2 through a fine tube 11. In this way any pressure fluctuation in the tube 2 is transmitted to behind the loudspeaker 1. Thus, if the pressure in the tube 2, which varies along with the pressure in the tank in which the apparatus is installed varies slowly, the cone paper (or its equivalent) of the loudspeaker will not be broken by being thrust forward or backward by pressure. If the air in the tube 2 is high in temperature and it is desireable that air be released to the exterior small pores 12 may be pierced in the circumferencial wall of the protective tube end 10. The positions of such pierced small pores 12 are naturally at a node of the stationary wave formed by driving of the loudspeaker 1 in the protective tube 10 (the frequency and the driving frequency of the loudspeaker are the same).

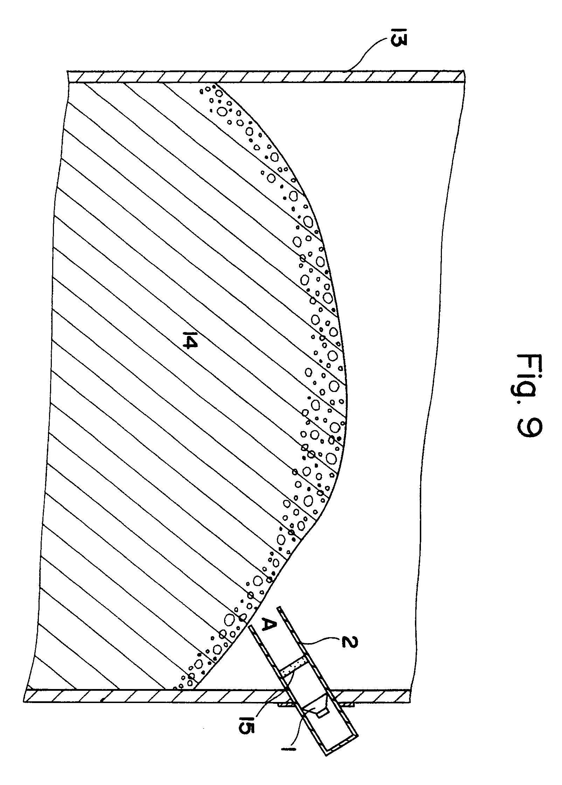

Referring now to Figs. 9 to 11, the same or equivalent parts as in Fig. 8 are identified with the same reference numbers and are not explained again.

In Fig. 9 the level detecting apparatus of Fig. 8 is shown fixed to the side wall of a tank 13 with the open end A of the tube 2 directed downwards so that even if the material 14 the level of which is to be detected is granular or powder and gets into the tube 2, it is prevented from accumulating there and soon drops out again.

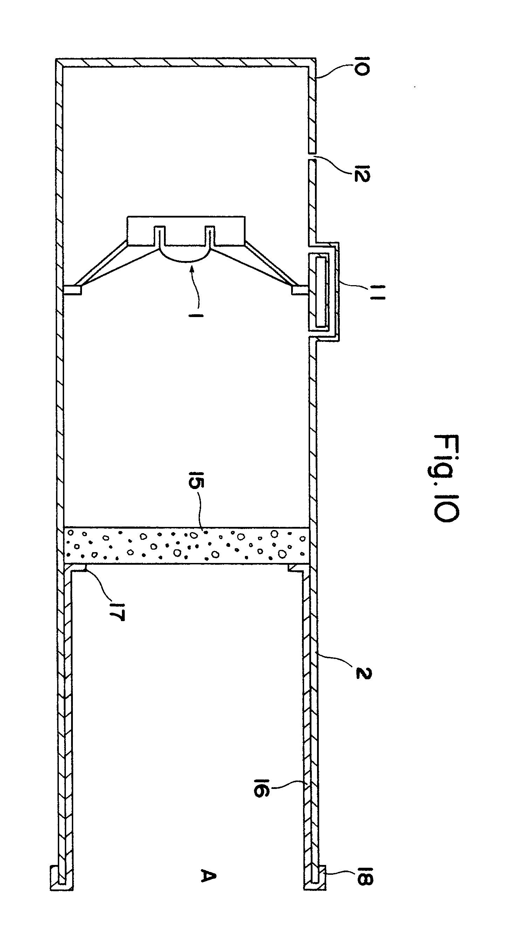

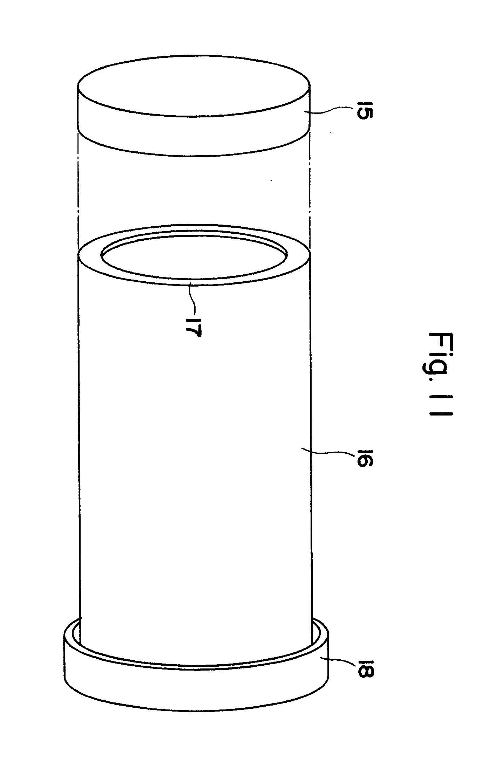

The detailed structure of the level detecting apparatus attached to the tank 13 is best seen in Figs. 10 and 11. A sponge is positioned in the tube 2 at a node of the stationary wave generated by the loudspeaker 1, so as to shut off the propagation route of the sound wave from the loudspeaker 1. For mounting the sponge 15 a further tube 16 with both ends open, is fitted into the tube 2. This further tube 16 has an outside diameter corresponding with the inside diameter of the tube 2. At one of the open ends of the tube 16 a ring-shaped flange 17 projects inward and the sponge 15 is adhered thereto. At the other open end a turned over lip 18 of U shaped section is formed to fit onto a circumferential edge of the open end A of tube 2.

The tube 16 is pushed in until the lip 18 engages the circumferential edge at the open end A of the tube 2, at which position the sponge 15 is disposed at the position of a node of the stationary wave. The sponge 15 prevents dust which enters the tube 2 from the open end A from depositing on the loudspeaker 1, yet does not impede sound passing through so that the detecting precision of the unit can be maintained for a long period. When the sponge 15 gets dirty it may be replaced with a new one simply by drawing out the tube 16, so maintenance is easy.

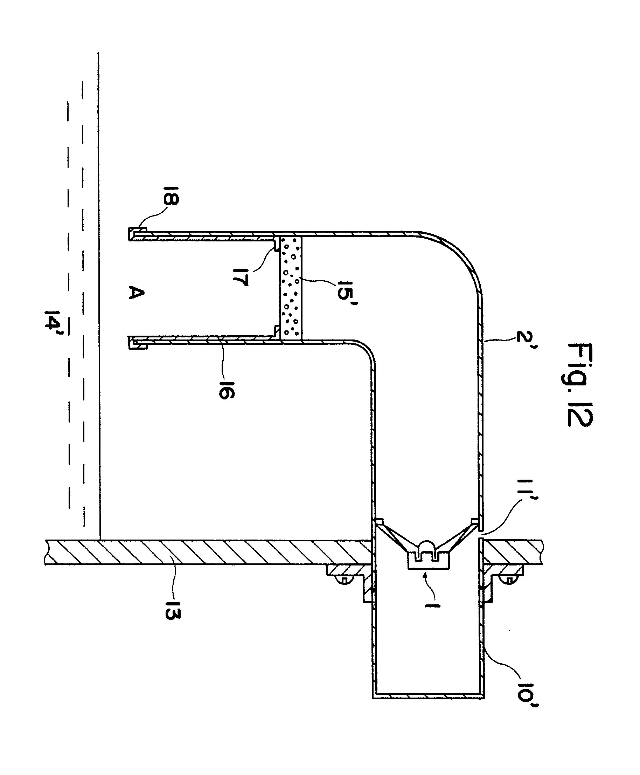

Fig. 12 shows a modified embodiment in which the tube 21 (otherwise similar to tube 2 in Fig. 10) is attached to the tank 13 with its front end part bent downward by 90 degrees. A tube 16 is fitted into the front end part of the tube 2' and a chemical-resistant sponge 15' is adhered to the flange 17 of the tube 16 (same as in Fig. 11). The position of the sponge 15' is against selected to be at a node of the stationary wave formed in the tube 2'. The sponge 15' may be acidic or alkaline so as to neutralize the vapour of liquid 14' (the level of which is to be detected) which enters from the front end of the tube 2'. Using such a structure, the level of the liquid 14' may be monitored without contacting the strongly acidic or strongly alkaline liquid 14', and a contactless level switch of very simple maintenance may be obtained. A small pore 11' is pierced in the protective closed tube end 10' to enable the internal pressure of the tank 13 to equalise with that of the closed tube end portion 10', thereby preventing breakage of the cone paper or its equivalent of the loudspeaker 1.

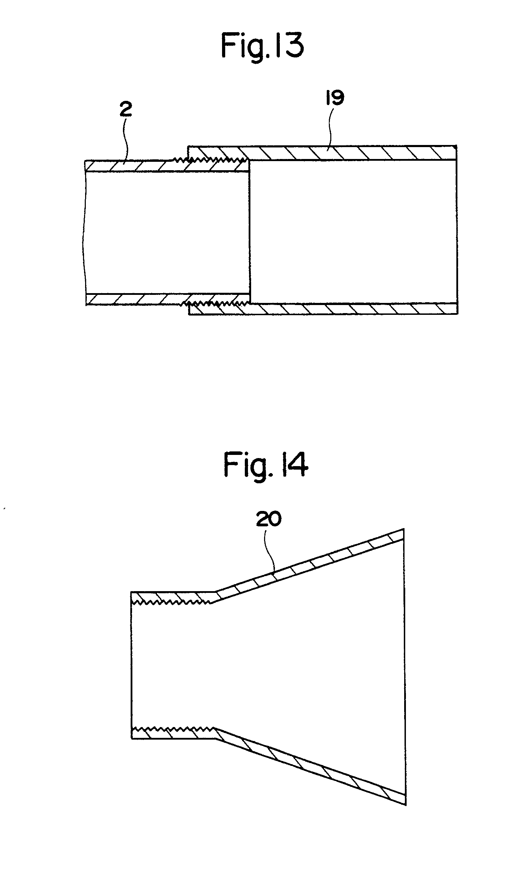

Fig. 13 shows how the structure of the front end part of the tube 2 of any embodiment thus far described may be modified by having another cylindrical tube 19 screwed onto its front end. By rotating the cylindrical tube 19, the length of the entire tube may be adjusted so that a node or antinode of the stationary wave may be positioned at the open end of the tube. Therefore sensitivity adjustment on site is facilitated.

The cylindrical tube 19 in Fig. 13 can be replaced by a trumpet-shaped tube 20 increasing and opening toward the front end, as shown in Fig. 14. Gradually increasing the inside diameter of the tube 20 towards the front open end makes it possible for materials consisting of large particles or lumps to easily get into the tube 20, and close off the open end so that the level of such materials can be reliably detected.

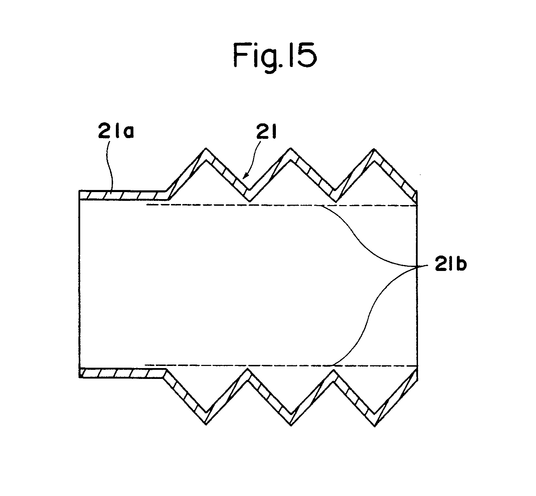

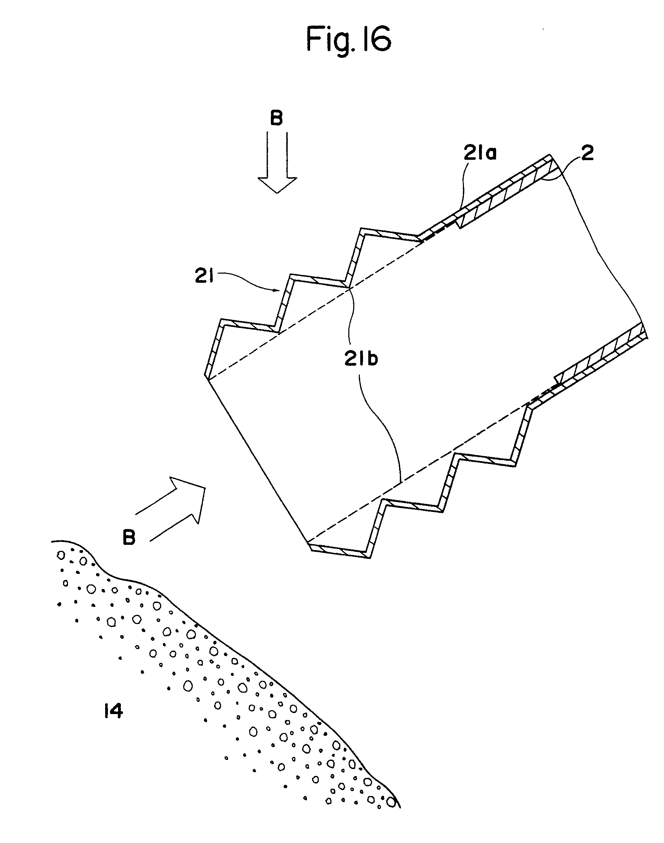

Fig. 15 shows another embodiment in which the shape of the front end part of the cylindrical tube 19 in Fig. 13 or the tube 2 of other embodiments is modified into flexible bellows. A cylindrical wire netting 21b knitted in mesh form is disposed inside the bellows part 21 and one end of the mesh is secured to the adjacent cylindrical portion 21a of the tube. Accordingly, if the material, the level of which is being measured, consists of heavy objects such as metal scrap, and is dropped or rebounds to hit the tube 21 in the direction indicated by arrow B in Fig. 16, the bellows part of the tube 21 is flexibly deformed and is then restored to the original form, i.e. it is designed not to be broken. The wire netting 21b is chosen of appropriate mesh coarseness that such objects will be prevented from getting into the folds of the bellows part 21.

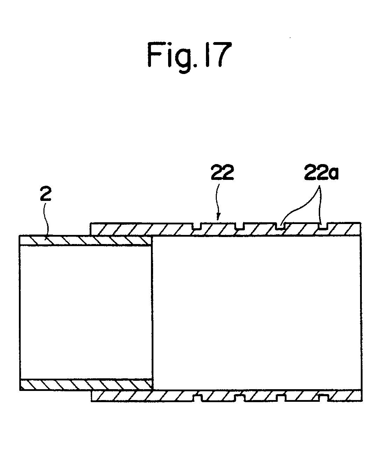

Fig. 17 illustrates another embodiment wherein instead of the bellows tube 21 in Fig. 15, plural annular recesses 22a are formed on the external circumferential surface to convert it into a flexible tube 22, and obtain the same effects as with bellows.

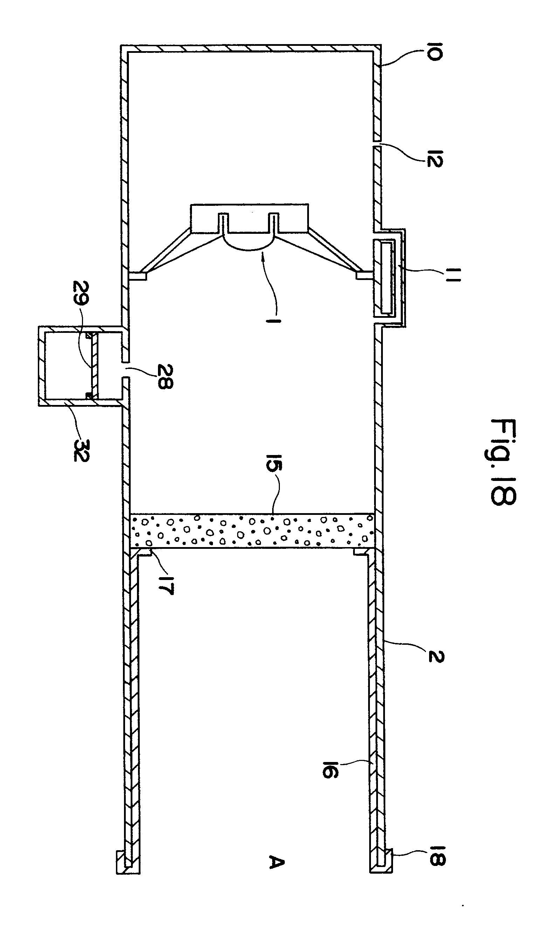

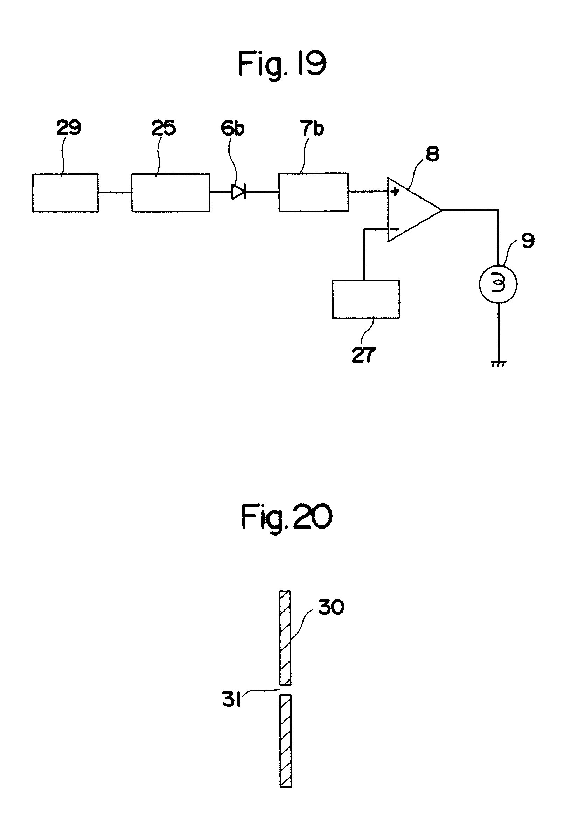

Referring now to Figs. 18 and 19 the level detecting apparatus of previous embodiments can be further modified by addition of a ceramic microphone 29 for detecting the magnitude of the sound emitted from the loudspeaker 1 and propagated through the tube 2. As indicated in Fig. 18, the microphone 29 is arranged in a housing 32 disposed outside of the tube 2 between the loudspeaker 1 and the sponge 15, and is mounted in such a way as to divide the space in the housing 32 into two. One side of the divided space communicates with the space in the tube 2 through a small-diameter hole 28, while the other side (the rear space of the microphone 29) communicates with the first space through a tiny air passage (not shown).

The electric circuit connected to the loudspeaker 1 and the microphone 29 in the above-mentioned arranged is illustrated in Fig. 19, where the same parts as in Fig. 5 are identified with the same reference numbers and are not explained again. The loudspeaker 1 is driven in sine wave form by the same type of driving circuit (4) as described in Fig. 5. The microphone 29 is connected to the band pass filter 25 (Fig. 6) so as to receive only the frequency component corresponding to the driving frequency of the driving circuit 4. Then, if the end A of the tube 2 is left open, the stationary wave formed in the tube 2 is resonating, so that the microphone 29 detects a loud sound.

As the end A is gradually closed off by the material, the level of which is being measured , the resonance state gradually becomes a semiresonant state, and the sound detected by the microphone 29 gradually reduces to a specified lower level.

Finally, Fig. 20 illustrates schematically a partition which can be used in any foregoing embodiments and has a dust preventive function equivalent to that of the sponge 15 in Fig. 11. This partition consists of a thin sheet 30 having a small-diameter hole 31 formed in its centre. The thin sheet 30 is installed at a node of the stationary wave formed in the tube 2, so that the waves can pass through the hole 31 with small diameter and the partition does not cause a barrier by preventing air movement.

The illustrated embodiments are intended to be exemplary and not limitative of the scope of the invention and the various modifications shown in Figs. 10 to 20 are equally applicable to apparatus where the stationary wave generating means is installed at one end, indeed closing one end of the tube (Figs. 1 and 3) as to apparatus where the wave generating means is located in the tube with a further tubular portion therebehind (Fig. 8).

## Claims

1. A method of detecting the level of a substance wherein a tubular member (2) with one end (A) open has stationary wave generating means (1) mounted therein or mounted at the other end thereof, the stationary wave generating means generates stationary waves having a node or antinode at the open end (A), and a switching signal arises when the open end is completely closed by the substance being measured or when the substance being measured approaches the open end.

2. Apparatus for detecting the level of a substance comprising:

an oscillator (4),

a tubular member (2) with at least one end (A) open,

stationary wave generating means (1), mounted at the other end of the tubular member (2), for generating stationary waves of a specific frequency so as to have a node or antinode at the one open end (A) of the tubular member (2) by receiving an oscillation output from the oscillator (4), and

a switching circuit operative to provide a switching signal when said one open end (A) of the tubular member (2) is completely closed by the substance being measured or the substance being measured approaches said one open end.

3. Apparatus for detecting the level of a substance comprising:

an oscillator (4),

a tubular member (2) with at least one end (A) open,

stationary wave generating means (1), installed within the tubular member (2), to divide it into an open side and a closed side,

a switching circuit operative to provide a switching signal when said one open end (A) of the tubular member (2) is completely closed by the substance being measured or the substance being measured approaches said one open end.

4. Apparatus according to claim 3, wherein a communicating member (11) is provided to communicate between the open side and the closed side of the tubular member (2) divided by the stationary wave generating means(1).

5. Apparatus according to claim 4, wherein the communicating member consists of a fine tube (11) (Fig. 8).

6. Apparatus according to claim 3, 4, or 5, wherein a fine pore (12) communicating with the exterior is disposed in the closed side of the tubular member (2).

7. Apparatus according to any of claims 2 to 6, wherein a sponge (15) is disposed in the tubular member (2) between the open end (A) thereof and the stationary wave generating means (1), and the sponge (15) is positioned at a node of the stationary wave (Figs. 10 and 12)

8. Apparatus according to claim 7, wherein a tube (16) is inserted into the open end region of the tubular member (2) in a manner free to move back and forth, and the sponge (15) is disposed at an insertion end of the tube (16) (Figs. 10 to 12).

9. Apparatus according to any of claims 2 to 6, wherein a partition wall (3) having a hole (31) in its centre is disposed between the open end (A) in the tubular member (2) and the stationary wave generating means (1), and the hole (31) in the partition wall (30) is positioned at a node of the stationary wave (Fig. 20).

10. Apparatus according to any of claims 2 to 9, wherein the open end portion of the tubular member (2) is in the form of bellows (21) and made of flexible material (Figs. 15 and 16).

11. Apparatus according to any of claims 2 to 9, wherein a cylindrical tube (19) is screwed onto the open end portion of the tubular member (2) (Fig. 13).

12. Apparatus according to any of claims 2 to 9, wherein a trumpet-shaped tube (20) increasing in diameter towards the front end is screwed onto the open end portion of the tubular member (2) (Fig. 14).

# Fig. 1

2

1

A

# Fig. 2

1a

1c

1b

1d

# Fig. 3

2

A

1

3

# Fig.4

# Fig.5

8

## Fig. 6

## Fig. 7

Fig. 8

Fig. 9

Fig.10

Fig.11

EP 0 462 342 A1

Fig.12

# Fig.13

# Fig. 14

Fig.15

## Fig. 16

Fig.I7

Fig.18

# Fig. 19

# Fig. 20

## EUROPEAN SEARCH REPORT

**European Patent Office**

**Application Number**

**EP 90 31 1217**

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 213 439 (D.E. ATKINSON)<br>* The whole document * | 1-3,6 | G 01 F 23/28 |
| X | US-A-3 139 544 (S.R. TOMES)<br>* The whole document * | 1,2,12 | |
| A | | 9 | |
| A | FR-A-2 241 080 (COMMISSARIAT A L'ENERGIE ATOMIQUE)<br>* Page 7, lines 25-34; page 8, lines 23-28; figures 7,8 * | 1-3,6,11 | |
| A | FR-A-2 233 608 (PILKINGTON BROTHERS LTD)<br>* Page 11, line 29 - page 12, line 23; claim 1; figures * | 1-3,6,11,<br>12 | |

**TECHNICAL FIELDS SEARCHED (Int. Cl.5)**

G 01 F

The present search report has been drawn up for all claims

| Place of search | Date of completion of search | Examiner |
|---|---|---|
| The Hague | 18 September 91 | ROSE A.R.P. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document